(19) Europäisches Patentamt / European Patent Office / Office européen des brevets

(11) **EP 3 941 648 B1**

(12) **EUROPÄISCHE PATENTSCHRIFT**

(45) Veröffentlichungstag und Bekanntmachung des Hinweises auf die Patenterteilung:
**05.04.2023   Patentblatt 2023/14**

(21) Anmeldenummer: **20705658.1**

(22) Anmeldetag: **13.02.2020**

(51) Internationale Patentklassifikation (IPC):
**B07B 1/46** *(2006.01)*       **B07B 1/18** *(2006.01)*
**B23P 11/00** *(2006.01)*      **B21D 39/00** *(2006.01)*
**B21D 39/03** *(2006.01)*      **B21K 25/00** *(2006.01)*
**D21D 5/16** *(2006.01)*

(52) Gemeinsame Patentklassifikation (CPC):
**B07B 1/4618; B07B 1/18; B21K 25/00; B23P 11/005; D21D 5/16;** B21D 39/00; B21D 39/037

(86) Internationale Anmeldenummer:
**PCT/EP2020/053704**

(87) Internationale Veröffentlichungsnummer:
**WO 2020/187498 (24.09.2020 Gazette 2020/39)**

(54) **SIEBHERSTELLVERFAHREN**

SCREEN PRODUCTION METHOD

PROCÉDÉ DE FABRICATION DE TAMIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2019   DE 102019107261**

(43) Veröffentlichungstag der Anmeldung:
**26.01.2022   Patentblatt 2022/04**

(73) Patentinhaber: **Voith Patent GmbH**
**89522 Heidenheim (DE)**

(72) Erfinder:
• **BRETTSCHNEIDER, Werner**
**88287 Grünkraut (DE)**

• **KAUER, Ingo**
**88422 Bad Buchau (DE)**
• **SCHÄDLER, Melanie**
**89547 Gerstetten (DE)**
• **BURGER, Ralf**
**89522 Heidenheim (DE)**
• **ABRAHAM, Jürgen**
**89564 Nattheim (DE)**

(74) Vertreter: **Voith Patent GmbH - Patentabteilung**
**St. Pöltener Straße 43**
**89522 Heidenheim (DE)**

(56) Entgegenhaltungen:
**DE-B3-102017 129 765      DE-B3-102018 101 666**

**Beschreibung**

Die Erfindung betrifft ein Verfahren zur Herstellung einer zylindrischen Siebvorrichtung mit einer Vielzahl von Profilstäben, bei dem die Profilstäbe parallel zueinander und parallel zur Zylinderachse in an der Innenseite einer Vielzahl von jeweils in einer zur Zylinderachse senkrechten Ebene um die Zylinderachse verlaufenden, in Axialrichtung voneinander beabstandeten Stabhalterringen vorgesehene randoffene Aussparungen eingesetzt werden, die hinsichtlich ihrer Form zumindest im Wesentlichen komplementär zur Form von Stabfüßen der Profilstäbe, jedoch zunächst noch geringfügig größer als diese sind, und der Innen- und Außendurchmesser der Stahlhalterringe über radial von außen wirkende Kräfte bis zum Formschluss zwischen den Profilstäben und den Aussparungen der Stahlhalterringe dauerhaft vermindert wird.

Nach einem solchen Verfahren hergestellte zylindrische Siebvorrichtungen werden beispielsweise zum Sortieren von Faserstoffsuspensionen, wie es in Drucksortierern der papiererzeugenden Industrie durchgeführt wird, eingesetzt. Dabei sollen die in der Suspension enthaltenen Fasern durch das Sieb hindurchtreten, während die nicht gewünschten festen Bestandteile an dem Spalt abgewiesen und aus der Siebvorrichtung wieder herausgeleitet werden. Dadurch, dass die Öffnungen eine im Wesentlichen längliche Form besitzen, also in Form von Schlitzen oder Spalten vorgesehen sind, werden faserige Teilchen leichter durchgelassen als die kubischen, selbst wenn beide Arten in ähnlicher Größenordnung vorliegen. Mit einer solchen Sortiertechnologie wird daher ein sehr guter Ausscheidungseffekt von nicht faserigen Störstoffen aus Faserstoffsuspensionen ermöglicht. Denkbar ist auch ein Einsatz zur Trennung unterschiedlicher Faserbestandteile, einer sogenannten Faserfraktionierung. Voraussetzung hierbei ist eine hohe Präzision der Schlitzform auf der ganzen Siebfläche.

Gegenüber älteren Siebherstellverfahren, bei denen Leisten mit einem einseitigen Nutprofil ausgelasert und mit Profilstäben zu einer Matte bestückt sowie anschließend zu einem Zylinder gebogen werden, um einen sich dabei auftretenden Klemmmechanismus zunutze zu machen und damit die erforderliche Stabilität des Siebkorbes zu erzielen, entfallen bei einem Verfahren der eingangs genannten Art die für das Biegen zu einem Zylinder erforderlichen aufwendigen Arbeitsschritte. Mit dem Bestücken des Startprofils in rundgelaserte, mit einem Nutprofil versehene Stabhalterringe entsteht ein Zylinder, der von vorn herein rund ist und nicht mehr gebogen und zusammengeschweißt werden muss. In einem zweiten Arbeitsschritt wird dieser Zylinder zusätzlich radial an jedem einzelnen Stabhalterring bzw. Unterzug gedrückt bzw. radial gepresst. Durch einen solchen Drück- bzw. radialen Pressvorgang und der damit verbundenen Verringerung des Innen- und Außendurchmessers des gesamten Zylinders entsteht eine Verklemmung im Profilstabverband. Durch das radiale Pressen wird der zwischen der Aussparung oder Nut und eines jeweiligen Profilstabs verbliebene Hohlraum bzw. das Spiel (Luft) zwischen der Aussparung und dem Profilstab weitgehend geschlossen. Zudem entsteht eine klassische Verformung, durch die sowohl das Material verdichtet als auch die Profilstäbe entlang der Stabfüße bzw. der Raum um diese Stabfüße verklemmt wird. Dieser Vorgang ist gelenkt und gesteuert, um die gewünschte bleibende Verringerung des Innen- und Außendurchmessers der Stabhalterringe zu erhalten. Ein solches Verfahren der eingangs genannten Art ist beispielsweise aus der DE 10 2013 224 528 B3 bekannt.

Weiterhin ist aus der DE 10 2018 101 666 B3 und aus der DE 10 2017 129 765 B3 ein Verfahren zur Herstellung einer zylindrischen Siebvorrichtung mit einer Vielzahl von Profilstäben bekannt. Die DE 10 2017 129 765 B3 offenbart ein Verfahren gemäß dem Oberbegriff des Anspruchs 1.

Es hat sich nun gezeigt, dass der zur gewünschten Klemmung bzw. der gewünschten bleibenden Durchmesserverringerung der Stabhalterringe durchzuführende radiale Pressweg von einer Reihe von Faktoren wie beispielsweise dem Außen- und Innendurchmesser eines jeweiligen Stabhalterrings, der Anzahl der in den Profilstäben vorgesehenen Aussparungen und damit der Anzahl der Profilstäbe bzw. Art dieser Profilstäbe unterschiedlicher Breite, der Qualität (bzw. der Toleranzen, des Spiels oder des Luftspalts) der gelaserten Aussparungen der Profilstäbe und/oder der Maßtoleranz eines jeweiligen Profilstabes und hier insbesondere wieder vom Zusammenspiel mit der zuvor genannten Maßtoleranz des Laserschnitts abhängig ist.

Werden die Lücken zu groß, was auch auf das früher erforderliche Klemmen durch Biegen zutrifft, so liegen die Profilstäbe sehr lose in den Aussparungen der Stabhalterringe, so dass es zum Schließen der entsprechend größeren bzw. zu großen Aussparungen der Stabhalterringe eines sehr großen (theoretischen) radialen Presswegs bedarf. Das radiale Pressen der Stabhalterringe ist jedoch hinsichtlich des machbaren Presswegs physikalisch beschränkt. So kann bei zu gro-ßen Presswegen ein Stabhalterring je nach dessen Außendurchmesser leicht ausbrechen und zum Wellen, d.h. einem sogenannten Buckling-Effekt führen.

Ein sich mit größer werdendem Innendurchmesser des Siebkorbes linear vergrö-ßernder erforderlicher radialer Pressweg hat jedoch normalerweise aufgrund des sogenannten Buckling-Effekts Grenzen. Die zu pressenden Stabhalterringe neigen mit zunehmenden Durchmessern zu immer größerem Ausbrechen und Verweilen (Buckling). Zudem ist dieser Effekt von der Ringdicke abhängig. Je dicker der Ring, umso geringer wäre die auftretende Buckling-Gefahr. Zu dicke Stabhalterringe erhöhen jedoch die Materialkosten und stehen zudem einem optimalen sowie wirtschaftlichen Laserschnitt zur Herstellung der Aussparungen der Stabhalterringe entgegen. Mit eine zu große axiale Dicke aufweisenden Stabhalterringen verringert sich zudem die offene Siebfläche zwischen diesen Stabhalterringern.

Der Erfindung liegt die Aufgabe zugrunde, ein Verfahren der eingangs genannten Art anzugeben, bei dem die zuvor genannten Nachteile beseitigt sind. Dabei soll insbesondere der beim Verpressen der einzelnen Stabhalterringe bisher auftretende Buckling-Effekt auf möglichst zuverlässige Weise vermieden werden.

Erfindungsgemäß wird diese Aufgabe durch ein Verfahren mit den Merkmalen des Anspruchs 1 gelöst. Bevorzugte Ausgestaltungen des erfindungsgemäßen Verfahrens ergeben sich aus den Unteransprüchen.

Beim erfindungsgemäßen Verfahren zur Herstellung einer zylindrischen Siebvorrichtung mit einer Vielzahl von Profilstäben werden die Profilstäbe parallel zueinander und parallel zur Zylinderachse in an der Innenseite einer Vielzahl von jeweils in einer zur Zylinderachse senkrechten Ebene um die Zylinderachse verlaufenden, in Axialrichtung voneinander beabstandeten Stabhalterringen vorgesehene randoffene Aussparungen eingesetzt, die hinsichtlich ihrer Form zumindest im Wesentlichen komplementär zur Form von Stabfüßen der Profilstäbe, jedoch zunächst noch größer als diese sind, und der Innen- und Außendurchmesser der Stabhalterringe über radial von außen wirkende Kräfte bis zum Formschluss zwischen den Profilstäben und den Aussparungen der Stabhalterringe dauerhaft vermindert. Dabei werden die radial von außen wirkenden Kräfte durch über den Umfang der Stabhalterringe verteilte Pressbacken aufgebracht, die jeweils mit mehreren sich in Umfangs- und Radialrichtung erstreckenden Nuten zur Aufnahme eines jeweiligen Stabhalterrings versehen sind, von denen während eines jeweiligen Pressvorgangs jeweils nur ein Teil (bevorzugt jeweils nur eine Nut) als Pressnut zur direkten radialen Pressung des betreffenden Stabhalterrings dient und die anderen Nuten lediglich als Führungsnuten dienen, durch die die betreffenden Stabhalterringe an einer axialen Auslenkung gehindert werden. Alternativ oder zusätzlich können mit einer wellenartigen Außenkontur vorgefertigte Stabhalterringe verwendet werden, die über deren wellenartige Außenkontur durch radial von au-ßen wirkende Kräfte radial gepresst werden.

Aufgrund dieser Ausgestaltung des Verfahrens sind die zuvor genannten Nachteile des Standes der Technik beseitigt, wobei auf zuverlässige Weise insbesondere der beim Verpressen der einzelnen Stabhalterringe bisher auftretende Buckling-Effekt vermieden wird. Zudem sind durch die erfindungsgemäßen Pressbacken deutlich höhere radiale Presswege als bisher möglich, so dass auch die Bestückungsluft in den Stabhalterringen für die einzusetzenden Profilstäbe großzügiger gehandhabt werden kann und dennoch ein sicheres Schließen der betreffenden Lücken gewährleistet ist.

Beim Verpressen der einzelnen Stabhalterringe durch die Pressnut eines jeweiligen Pressbackens wird nur über die Pressnut eine direkte radiale Presskraft auf den entsprechenden Stabhalterring aufgebracht, während die anderen Nuten des Pressbackens lediglich die Halteführung der Nachbarringe übernehmen.

Gemäß einer zweckmäßigen praktischen Ausgestaltung des erfindungsgemäßen Verfahrens werden über die Pressnut einer jeweiligen Pressbacke nacheinander verschiedene Stabhalterringe jeweils einer direkten radialen Pressung ausgesetzt.

Dabei können zur aufeinander folgenden direkten radialen Pressung der verschiedenen Stabhalterringe durch die Pressnut einer jeweiligen Pressbacke zweckmäßigerweise die mit den Profilstäben bestückten Stabhalterringe und die Pressbacke axial relativ zueinander verlagert werden.

Von Vorteil ist insbesondere, wenn die Pressbacken mit jeweils zwei bis neun sich in Umfangs- und Radialrichtung erstreckenden Nuten zur Aufnahme eines jeweiligen Stabhalterrings verwendet werden.

Gemäß einer bevorzugten praktischen Ausgestaltung des erfindungsgemäßen Verfahrens werden Pressbacken mit jeweils einer ungeraden Anzahl von sich in Umfangs- und Radialrichtung erstreckenden Nuten zur Aufnahme eines jeweiligen Stabhalterrings verwendet, von denen nur die mittlere Nut als Pressnut vorgesehen ist.

Im diesem Fall wird nur über die mittlere Pressnut eine direkte radiale Presskraft auf den betreffenden Stabhalterring ausgeübt, während die benachbarten Nuten der Pressbacke lediglich die Aufgabe einer Halteführung übernehmen, womit eine nach oben und unten gerichtete Auslenkung gegenüber der Horizontalen dieser Nachbarringe vermieden wird.

Dabei kann eine jeweilige Pressbacke bei größeren anfänglichen Außendurchmessern der Stabhalterringe mit einer größeren Anzahl von Nuten versehen sein als bei einem kleineren anfänglichen Außendurchmesser der Stabhalterringe. So werden gemäß einer bevorzugten praktischen Ausgestaltung des erfindungsgemäßen Verfahrens bei einer Verwendung von Stabhalterringen mit einem jeweiligen anfänglichen Außendurchmesser im Bereich von 1200 mm Pressbacken mit jeweils fünf, sieben oder neun sich in Umfangs- und Radialrichtung erstreckenden Nuten und bei einer Verwendung von Stabhalterringen mit einem jeweiligen anfänglichen Außendurchmesser kleiner als etwa 600 mm Pressbacken mit jeweils drei sich in Umfangs- und Radialrichtung erstreckenden Nuten zur Aufnahme eines jeweiligen Stabhalterrings eingesetzt.

Die radiale Pressung der Stabhalterringe erfolgt erfindungsgemäß durch mehrere gleichmäßig über deren Umfang verteilte Pressbacken.

Dabei ist insbesondere von Vorteil, wenn zur Überbrückung von am Anfang eines jeweiligen Pressvorgang zwischen den gleichmäßig über den Umfang verlaufenden Pressbacken vorgesehenen, mit zunehmender radialer Pressung der Stabhalterringe kleiner werdenden Abständen in die betreffenden Lücken Zwischenbacken eingeschoben werden.

Damit wird dem Umstand Rechnung getragen, dass die betreffenden Lücken zwischen den Pressbacken freie, nicht geführte Schnittstellen darstellen, an denen die radial gepressten Ringe ausbrechen können. Ein solches Ausbrechen wird durch die Zwischenbacken verhindert.

Um die Bestückung der Stabhalterringe mit den Profilstäben zu erleichtern, besteht vor der radialen Pressung der Stabhalterringe zwischen einem jeweiligen in eine Aussparung eines Stabhalterrings eingesetzten Profilstab und der Wand der Aussparung in Umfangsrichtung der zylindrischen Siebvorrichtung ein Luftspalt. Dieser Luftspalt wird mit der radialen Pressung eines jeweiligen Stabhalterrings soweit wie möglich verschlossen.

Der radiale Pressweg, dem ein jeweiliger Stabhalterring ausgesetzt wird, kann vorteilhafterweise in Abhängig vom Ziel-Innendurchmesser, d.h. dem vorgebbaren endgültigen Innendurchmesser eines jeweiligen Stabhalterrings, gewählt werden.

Gemäß einer bevorzugten praktischen Ausgestaltung des erfindungsgemäßen Verfahrens wird der radiale Pressweg, dem ein jeweiliger Stabhalterring ausgesetzt wird, zumindest im Wesentlichen durch die folgende Beziehung bestimmt:

$$P = ((Z \times Pi) + (N \times L \times F) / Pi) - Z,$$

wobei

P = radialer Pressweg;
Z = Ziel-Innendurchmesser, d.h. vorgebbarer endgültiger Innendurchmesser eines jeweiligen Stabhalterrings;
Pi = Kreiszahl;
N = Anzahl der in den Stabhalterringen insgesamt vorgesehenen Aussparungen;
L = Luftspalt zwischen einem jeweiligen in eine Aussparung eines Stabhalterrings eingesetzten Profilstabs und der Wand der Aussparung in Umfangsrichtung der zylindrischen Siebvorrichtung;
F = Zuschlagsfaktor.

Dabei steigt der erforderliche radiale Pressweg mit größer werdendem Innendurchmesser des Siebkorbes an.

Gemäß einer beispielhaften praktischen Ausgestaltung des erfindungsgemäßen Verfahrens liegt der von der radialen Pressung der Stabhalterringe in Umfangsrichtung der zylindrischen Siebvorrichtung vorgesehene durchschnittliche Luftspalt zwischen den Profilstäben und den Wänden der Aussparungen der Stabhalterringe zwischen etwa 0,02 mm und etwa 0,06 mm und vorzugsweise im Bereich von 0,02 mm, im Bereich von 0,04 mm oder im Bereich von 0,06 mm.

Von Vorteil ist insbesondere auch, wenn die axiale Dicke eines jeweiligen Stabhalterrings unabhängig vom endgültigen Außendurchmesser der zylindrischen Siebvorrichtung zwischen 2 mm und 8 mm und vorzugsweise zwischen 2,5 mm und 4 mm liegt.

Gemäß einer bevorzugten praktischen Ausgestaltung des erfindungsgemäßen Verfahrens wird bei einer Verwendung mit einer wellenartigen Außenkontur vorgefertigter Stabhalterringe die Wellung der Außenkontur der Stabhalterringe so vorgesehen, dass die Stabhalterringe bei einer radialen Pressung über deren wellenartige Außenkontur jeweils eine Makro- und/oder Mikrowellung in axialer und radialer Richtung sowie eine Mischung zwischen einer direkt wirkenden radialen Presskraft im Bereich eines jeweiligen Wellenbergs und radial schräg zur direkt wirkenden Radialkraft auftretenden Schleppkräften im Bereich eines jeweiligen Wellentales erfahren.

Auch mit einer solchen Ausgestaltung des Verfahrens wird insbesondere wieder dem sogenannten Buckling-Effekt entgegengewirkt.

Bei einer Verwendung solcher mit einer wellenartigen Außenkontur vorgefertigter Stabhalterringe kann die Wellung der Außenkontur der Stabhalterringe beispielsweise zumindest im Wesentlichen sinusförmig vorgesehen werden.

Die Erfindung wird im Folgenden anhand von Ausführungsbeispielen unter Bezugnahme auf die Zeichnung näher erläutert; in dieser zeigen:

Fig. 1     eine schematische Teilansicht einer nach dem erfindungsgemäßen Verfahren hergestellten beispielhaften zylindrischen Siebvorrichtung,

Fig. 2     eine schematische Darstellung eines mit seinem Stabfuß in eine Aussparung eines Stabhalterrings eingesetzten Profilstabs vor der Durchmesserreduzierung des Stabhalterrings,

Fig. 3     eine schematische Darstellung eines mit seinem Stabfuß in eine Aussparung eines Stabhalterrings eingesetzten Profilstabs nach der Durchmesserreduzierung des Stabhalterrings,

Fig. 4     eine schematische Darstellung einer beispielhaften Pressvorrichtung mit über den Umfang der Stabhalterringe verteilten Pressbacken zum Aufbringen der radial von außen wirkenden Kräfte auf die mit den Profilstäben bestückten Stabhalterringe,

Fig. 5 eine schematische Darstellung einer beispielhaften, zur radialen Pressung der Stabhalterringe verwendbaren Pressbacke,

Fig. 6 eine schematische Darstellung eines beispielhaften, in eine jeweilige Lücke zwischen den Pressbacken einschiebbaren Zwischenbackens,

Fig. 7 eine schematische Darstellung zweier beispielhafter, jeweils mit einer wellenartigen Außenkontur vorgefertigter Stabhalterringe,

Fig. 8 eine schematische Darstellung beispielhafter Radien der wellenartigen Außenkontur eines Stabhalterrings, und

Fig. 9 eine schematische Teildarstellung einer beispielhaften Teilung der Berge und Täler einer wellenartigen Außenkontur eines mit Profilstäben zu bestückenden Stahlhalterrings.

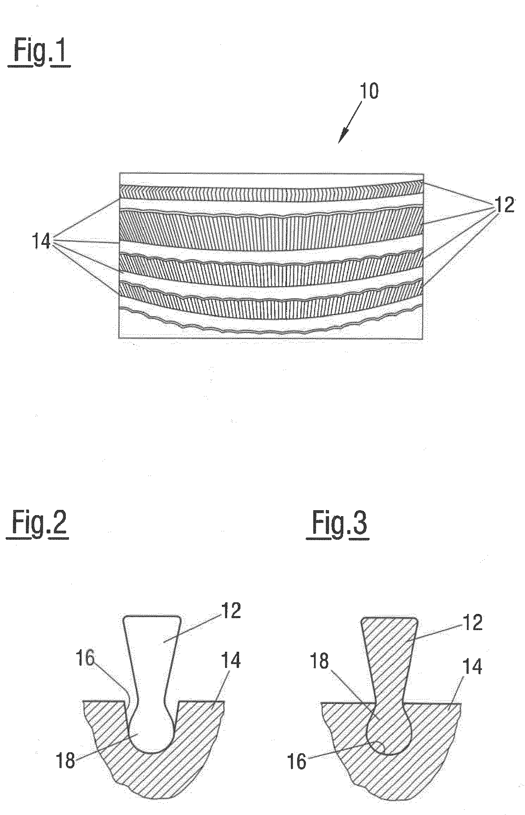

Die Fig. 1 bis 9 zeigen unterschiedliche beispielhafte Ausgestaltungen des erfindungsgemäßen Verfahrens zur Herstellung einer zylindrischen Siebvorrichtung 10 mit einer Vielzahl von Profilstäben 12, bei dem die Profilstäbe 12 parallel zueinander und parallel zur Zylinderachse in an der Innenseite einer Vielzahl von jeweils in einer zur Zylinderachse senkrechten Ebene um die Zylinderachse verlaufenden, in Axialrichtung zueinander beabstandeten Stabhalterringen 14 vorgesehene randoffene Aussparungen 16 eingesetzt werden, die hinsichtlich ihrer Form zumindest im Wesentlichen komplementär zur Form von Stabfüßen 18 der Profilstäbe 12, jedoch zunächst noch geringfügig größer als diese sind, und der Innen- und Außendurchmesser der Stabhalterringe 14 über radial von außen wirkende Kräfte bis zum Formschluss zwischen den Profilstäben 12 und den Aussparungen 16 der Stabhalterringe 14 dauerhaft vermindert wird.

Fig. 1 zeigt in schematischer Teilansicht eine nach dem erfindungsgemäßen Verfahren hergestellte beispielhafte zylindrische Siebvorrichtung 10.

Fig. 2 zeigt in schematischer Darstellung einen mit seinem Stabfuß 18 in eine Aussparung 16 eines Stabhalterrings 14 eingesetzten Profilstabs 12 vor der Durchmesserreduzierung des Stabhalterrings 14. Demgegenüber ist in Fig. 3 in schematischer Darstellung ein mit seinem Stabfuß 18 in eine Aussparung 16 eines Stabhalterrings 14 eingesetzter Profilstab nach der Durchmesserreduzierung des Stabhalterrings 14 wiedergegeben.

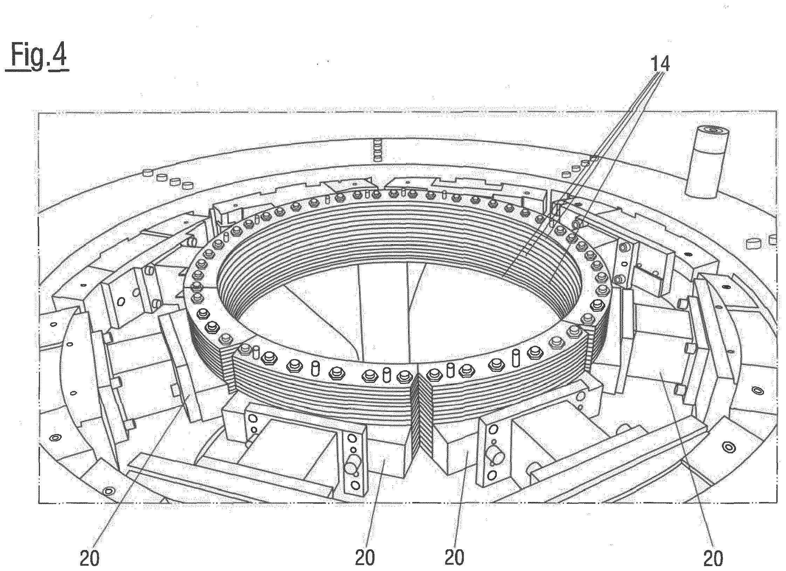

Wie aus den Fig. 4 bis 6 ersichtlich, können die radial von außen wirkenden Kräfte beispielsweise durch über den Umfang der Stabhalterringe 14 verteilte Pressbacken 20 aufgebracht werden, die jeweils mit mehreren sich in Umfangs- und Radialrichtung erstreckenden Nuten 22 zur Aufnahme eines jeweiligen Stabhalterrings 14 versehen sind. Dabei dient während eines jeweiligen Pressvorgangs jeweils nur ein Teil, hier jeweils nur eine Nut 22' als Pressnut zur direkten radialen Pressung des betreffenden Stabhalterrings 14, während die anderen Nuten 22 lediglich als Führungsnuten dienen, durch die die betreffenden Stabhalterringe 14 insbesondere an einer axialen Auslenkung gegenüber der Horizontalen gehindert werden.

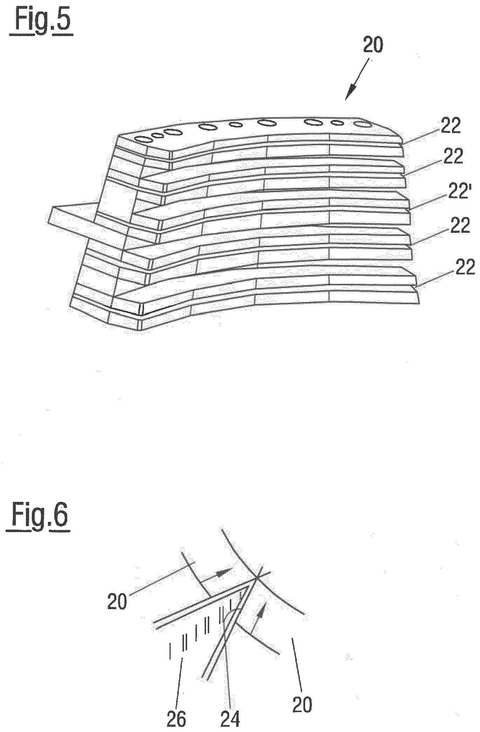

Fig. 5 zeigt in schematischer Darstellung eine beispielhafte, zur radialen Pressung der Stabhalterringe 14 verwendbare Pressbacke 20. Dabei besitzt diese Pressbacke 20 im vorliegenden Fall beispielsweise fünf Nuten 22 zur Aufnahme eines jeweiligen Stabhalterrings 14, von denen lediglich die mittlere Nut 22' als Pressnut zur direkten radialen Pressung des betreffenden Stabhalterrings 14 dient, während die anderen Nuten 22 lediglich als Führungsnuten vorgesehen sind, durch die die betreffenden Stabhalterringe 14 an einer axialen Auslenkung gehindert werden.

Über die Pressnut 22' einer jeweiligen Pressbacke 20 können nacheinander verschiedene Stabhalterringe 14 jeweils einer direkten radialen Pressung ausgesetzt werden.

Dabei können zur aufeinanderfolgenden direkten radialen Pressung der verschiedenen Stabhalterringe 14 durch die Pressnut 22' einer jeweiligen Pressbacke 20 die mit den Profilstäben 12 bestückten Stabhalterringe 14 und die Pressbacke 20 axial relativ zueinander verlagert werden.

Für die Pressnut 22' und die Führungsnuten 22 sind enge Toleranzen von beispielsweise 0 bis 6/10 mm vorzusehen, die einerseits ein zu großes Spiel vermeiden, um einen jeweiligen Stabhalterring 14 optimal zu halten und zu führen, und andererseits keine Klemmung zu verursachen, so dass ein jeweiliger Stabhalterring 14 nicht in der betreffenden Nut steckenbleibt. Die Pressnuttiefe kann so tief geführt werden, dass der betreffende Stabhalterring mit einem Abstand von beispielsweise nur 2 mm zum Profilstabverband weiträumig umhüllt wird. Die weiteren Nuten 22 der Pressbacke 20 dienen lediglich als Führungsnuten, die sicherstellen, dass die betreffenden Stabhalterringe 14 während des Pressvorgangs nicht bezüglich der Horizontalen nach oben oder unten ausgelenkt werden, so dass ein sogenannter Buckling-Effekt zuverlässig vermieden wird. Von Vorteil ist insbesondere auch, wenn beim Auseinanderfahren der Pressbacken 20 nach dem radialen Pressvorgang sich die Nuten 22, 22' wieder öffnen.

Es können insbesondere Pressbacken 20 mit jeweils zwei bis neun sich in Umfangs- und Radialrichtung erstreckenden Nuten 22 zur Aufnahme eines jeweiligen Stabhalterrings 14 verwendet werden.

Dabei können insbesondere Pressbacken 20 mit jeweils einer ungeraden Anzahl von sich in Umfangs- und Radialrichtung erstreckenden Nuten 22 zur Aufnahme eines jeweiligen Stabhalterrings 14 verwendet werden, von denen nur die mittlere Nut als Pressnut 20' vorgesehen ist.

Die jeweilige Anzahl von Nuten 22 einer jeweiligen Pressbacke 20 kann in Abhängigkeit vom Durchmesser der Stabhalterringe 14 gewählt werden. So können bei einer Verwendung von Stabhalterringen 14 mit einem jeweiligen anfänglichen Außendurchmesser im Bereich von z.B. 1200 mm beispielsweise Pressbacken 20 mit jeweils fünf, sieben oder neun sich in Umfangs- und Radialrichtung erstreckenden Nuten 22 und bei einer Verwendung von Stabhalterringen 14 mit einem jeweiligen anfänglichen Außendurchmesser kleiner als etwa 600 mm beispielsweise Pressbacken 20 mit jeweils drei sich in Umfangs- und Radialrichtung erstreckenden Nuten 22 zur Aufnahme eines jeweiligen Stabhalterrings 14 eingesetzt werden.

Die radiale Pressung der Stabhalterringe 14 kann durch mehrere gleichmäßig über deren Umfang verteilte Pressbacken 20 erfolgen.

Wie aus Fig. 6 ersichtlich, können zur Überbrückung von am Anfang eines jeweiligen Pressvorgangs zwischen den gleichmäßig über den Umfang verlaufenden Pressbacken 20 vorgesehenen, mit zunehmender radialer Pressung der Stabhalterringe 14 kleiner werdenden Abständen in die betreffenden Lücken 24 Zwischenbacken 26 eingeschoben werden.

Wie bereits ausgeführt, kann vor der radialen Pressung der Stabhalterringe 14 zwischen einem jeweiligen in eine Aussparung 16 eines Stabhalterrings 14 eingesetzten Profilstab 12 und der Wand der Aussparung 16 in Umfangsrichtung der zylindrischen Siebvorrichtung ein Luftspalt bestehen.

Der radiale Pressweg, dem ein jeweiliger Stabhalterring 14 ausgesetzt wird, kann insbesondere in Abhängigkeit vom Ziel-Innendurchmesser, d.h. dem vorgebbaren endgültigen Innendurchmesser eines jeweiligen Stabhalterrings 14, gewählt werden.

Der radiale Pressweg, dem ein jeweiliger Stabhalterring 14 ausgesetzt wird, kann vorteilhafterweise zumindest im Wesentlichen durch die folgende Beziehung bestimmt werden:

$$P = ((Z \times Pi) + (N \times L \times F) / Pi) - Z,$$

wobei

P = radialer Pressweg;
Z = Ziel-Innendurchmesser, d.h. vorgebbarer endgültiger Innendurchmesser eines jeweiligen Stabhalterrings;
Pi = Kreiszahl;
N = Anzahl der in den Stabhalterringen 14 insgesamt vorgesehenen Aussparungen 16;
L = Luftspalt zwischen einem jeweiligen in eine Aussparung 16 eines Stabhalterrings eingesetzten Profilstabs 12 und der Wand der Aussparung 16 in Umfangsrichtung der zylindrischen Siebvorrichtung 10;
F = Zuschlagsfaktor.

Der vor der radialen Pressung der Stabhalterringe 14 in Umfangsrichtung der zylindrischen Siebvorrichtung 10 vorgesehene durchschnittliche Luftspalt zwischen den Profilstäben 12 und den Wänden der Aussparungen 16 der Stabhalterringe 14 kann beispielsweise zwischen etwa 0,02 mm und etwa 0,06 mm und insbesondere im Bereich von 0,02 mm, im Bereich von 0,04 mm oder im Bereich von 0,06 mm liegen.

Die axiale Dicke eines jeweiligen Stabhalterrings 14 kann unabhängig vom endgültigen Außendurchmesser der zylindrischen Siebvorrichtung 10 beispielsweise zwischen 2 mm und 8 mm und insbesondere zwischen 2,5 mm und 4 mm liegen.

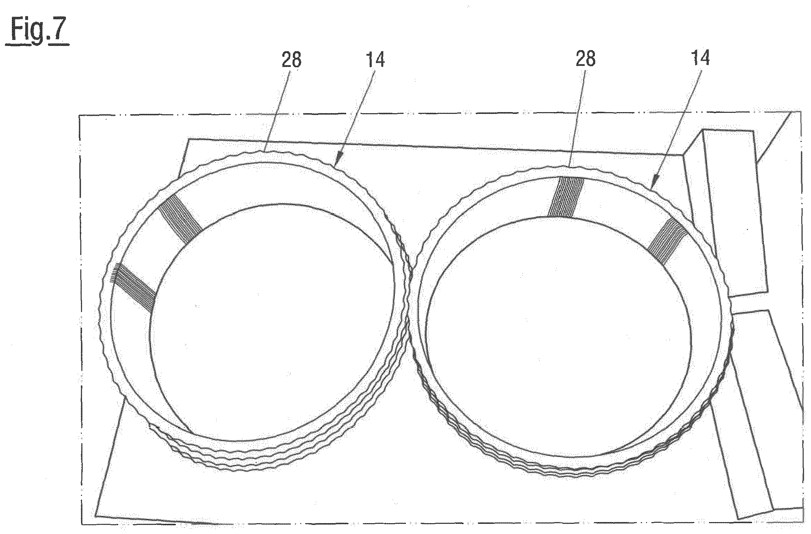

Wie aus den Fig. 7 bis 9 ersichtlich, können zusätzlich oder alternativ zu den Pressbacken 20 auch jeweils mit einer wellenartigen Außenkontur 28 vorgefertigte Stabhalterringe 14 verwendet werden, die über deren wellenartige Außenkontur 28 durch radial von außen wirkende Kräfte radial gepresst werden. Auch durch eine solche radiale Pressung über eine wellenartige Außenkontur 28 der Stabhalterringe 14 wird insbesondere wieder sichergestellt, dass kein sogenannter Buckling-Effekt auftritt.

Fig. 7 zeigt in schematischer Darstellung zwei beispielhafte, jeweils mit einer solchen wellenartigen Außenkontur 28 vorgefertigte Stabhalterringe 14.

Dabei kann bei einer Verwendung solcher mit einer wellenartigen Außenkontur 28 vorgefertigter Stabhalterringe 14 die Wellung der Außenkontur 28 der Stabhalterringe 14 insbesondere so vorgesehen sein, dass die Stabhalterringe 14 bei einer radialen Pressung über deren wellenartige Außenkontur 28 jeweils eine Makro- und/oder Mikrowellung in axialer und radialer Richtung sowie eine Mischung zwischen einer direkt wirkenden radialen Presskraft im Bereich eines jeweiligen Wellenbergs und radial und schräg zur direkt wirkenden Radialkraft auftretenden Schleppkräften im Bereich eines jeweiligen Wellentales erfahren.

Bei einer Verwendung mit einer wellenartigen Außenkontur vorgefertigter Stabhalterringe 14 kann die Wellung der Außenkontur 28 der Stabhalterringe 14 beispielsweise zumindest im Wesentlichen sinusförmig vorgesehen werden.

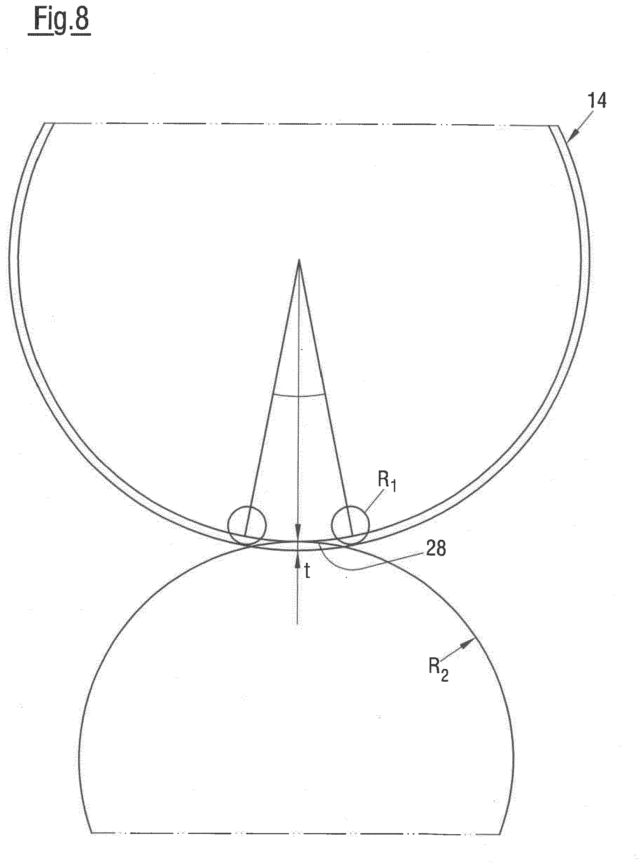

Fig. 8 zeigt in schematischer Darstellung beispielhafte Radien einer solchen wellenartigen Außenkontur 28 eines Stabhalterrings 14. Dabei besitzt ein jeweiliger Berg einer betreffenden wellenartigen Außenkontur 28 eines jeweiligen Stabhalterrings 14 beispielsweise einen Radius $R_1$ im Bereich von 1 bis 15 mm und ein jeweiliges Tal der wellenartigen Außenkontur 28 beispielsweise einen um t im Bereich von 0,3 bis 5 mm kleineren Durchmesser, der beispielsweise über einen Zylinder mit dem Radius $R_2$ im Bereich von 2 bis 30 mm erzeugt wird. Die Teilung der Berge und Täler der wellenartigen Außenkontur 28 bzw. der Winkel zwischen deren Radien kann beispielsweise im Bereich von 0,1 bis 15° liegen.

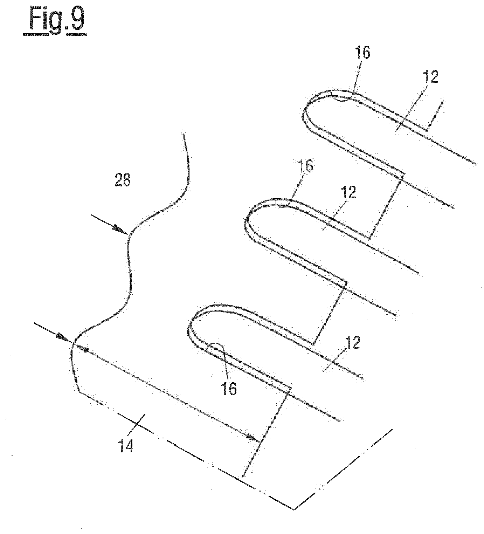

Fig. 9 zeigt eine schematische Darstellung einer beispielhaften Teilung der Berge und Täler einer wellenartigen Außenkontur 28 eines mit Profilstäben 12 zu bestückenden Stabhalterrings 14. Dabei entspricht die Teilung der Täler im vorliegenden Fall beispielsweise der Teilung der Aussparungen 16 zur Aufnahme der Profilstäbe 12, so dass eine jeweilige über einen Berg eingebrachte direkte Radialkraft zwischen zwei benachbarten Aussparungen 16 zum Tragen kommt sowie radial und schräg zur direkt wirkenden Radialkraft verlaufende Schleppkräfte auftreten.

Bezugszeichenliste

| | |
|---|---|
| 10 | zylindrische Siebvorrichtung |
| 12 | Profilstab |
| 14 | Stabhalterring |
| 16 | randoffene Aussparung |
| 18 | Stabfuß |
| 20 | Pressbacke |
| 22 | Nut |
| 22' | Pressnut |
| 24 | Lücke |
| 26 | Zwischenbacke |
| 28 | wellenartige Außenkontur |
| $R_1$ | Radius eines Berges einer wellenartigen Außenkontur |
| $R_2$ | Radius eines Zylinders zur Erzeugung eines Tales der Außenkontur |
| t | Differenz der Radien eines Berges und eines Tales der wellenartigen Außenkontur |

**Patentansprüche**

1. Verfahren zur Herstellung einer zylindrischen Siebvorrichtung (10) mit einer Vielzahl von Profilstäben (12), bei dem die Profilstäbe (12) parallel zueinander und parallel zur Zylinderachse in an der Innenseite einer Vielzahl von jeweils in einer zur Zylinderachse senkrechten Ebene um die Zylinderachse verlaufenden, in Axialrichtung voneinander beabstandeten Stabhalterringen (14) vorgesehene randoffene Aussparungen (16) eingesetzt werden, die hinsichtlich ihrer Form zumindest im Wesentlichen komplementär zur Form von Stabfüßen (18) der Profilstäbe (12), jedoch zunächst noch geringfügig größer als diese sind, und der Innen- und Außendurchmesser der Stabhalterringe (14) über radial von außen wirkende Kräfte bis zum Formschluss zwischen den Profilstäben (12) und den Aussparungen (16) der Stabhalterringe (14) dauerhaft vermindert wird, wobei die radial von außen wirkenden Kräfte durch über den Umfang der Stabhalterringe (14) verteilte Pressbacken (20) aufgebracht werden, **dadurch gekennzeichnet, dass** die Pressbacken (20) die jeweils mit mehreren sich in Umfangs- und Radialrichtung erstreckenden Nuten (22) zur Aufnahme eines jeweiligen Stabhalterrings (14) versehen sind, von denen während eines jeweiligen Pressvorgangs jeweils nur ein Teil als Pressnut zur direkten radialen Pressung des betreffenden Stabhalterrings (14) dient und die anderen Nuten (22) lediglich als Führungsnuten dienen, durch die die betreffenden Stabhalterringe (14) an einer axialen Auslenkung gehindert werden, und/oder jeweils mit einer wellenartigen Außenkontur (28) vorgefertigte Stabhalterringe (14) verwendet werden, die über deren wellenartige Außenkontur (28) durch radial von außen wirkende Kräfte radial gepresst werden.

2. Verfahren nach Anspruch 1, wobei über die Pressnut (22') einer jeweiligen Pressbacke (20) nacheinander verschiedene Stabhalterringe (14) jeweils einer direkten radialen Pressung ausgesetzt werden.

3. Verfahren nach Anspruch 2, wobei zur aufeinander folgenden direkten radialen Pressung der verschiedenen Stabhalterringe (14) durch die Pressnut (22') einer jeweiligen Pressbacke (20) die mit den Profilstäben (12) bestückten Stabhalterringe (14) und die Pressbacke (20) axial relativ zueinander verlagert werden.

4. Verfahren nach zumindest einem der vorstehenden Ansprüche, wobei Pressbacken (20) mit jeweils zwei bis neun sich in Umfangs- und Radialrichtung erstreckenden Nuten (22) zur Aufnahme eines jeweiligen Stabhalterrings (14) verwendet werden.

5. Verfahren nach zumindest einem der vorstehenden Ansprüche, wobei Pressbacken (20) mit jeweils einer ungeraden Anzahl von sich in Umfangs- und Radialrichtung erstreckenden Nuten (22) zur Aufnahme eines jeweiligen Stabhalterrings (14) verwendet werden, von denen nur die mittlere Nut als Pressnut (20') vorgesehen ist.

6. Verfahren nach Anspruch 5, wobei bei einer Verwendung von Stabhalterringen (14) mit einem jeweiligen anfänglichen Außendurchmesser im Bereich von 1200 mm Pressbacken (20) mit jeweils fünf, sieben oder neun sich in Umfangs- und Radialrichtung erstreckenden Nuten (22) und bei einer Verwendung von Stabhalterringen (14) mit einem jeweiligen anfänglichen Außendurchmesser kleiner als etwa 600 mm Pressbacken (20) mit jeweils drei sich in Umfangs- und Radialrichtung erstreckenden Nuten (22) zur Aufnahme eines jeweiligen Stabhalterrings (14) eingesetzt werden.

7. Verfahren nach zumindest einem der vorstehenden Ansprüche, wobei die radiale Pressung der Stabhalterringe (14) durch mehrere gleichmäßig über deren Umfang verteilte Pressbacken (20) erfolgt.

8. Verfahren nach Anspruch 7, wobei zur Überbrückung von am Anfang eines jeweiligen Pressvorgangs zwischen den gleichmäßig über den Umfang verlaufenden Pressbacken (20) vorgesehenen, mit zunehmender radialer Pressung der Stabhalterringe (14) kleiner werdenden Abständen in die betreffenden Lücken (24) Zwischenbacken (26) eingeschoben werden.

9. Verfahren nach zumindest einem der vorstehenden Ansprüche, wobei vor der radialen Pressung der Stabhalterringe (14) zwischen einem jeweiligen in eine Aussparung (16) eines Stabhalterrings (14) eingesetzten Profilstab (12) und der Wand der Aussparung (16) in Umfangsrichtung der zylindrischen Siebvorrichtung ein Luftspalt besteht.

10. Verfahren nach zumindest einem der vorstehenden Ansprüche, wobei der radiale Pressweg, dem ein jeweiliger Stabhalterring (14) ausgesetzt wird, in Abhängigkeit vom Ziel-Innendurchmesser, d.h. dem vorgebbaren endgültigen Innendurchmesser eines jeweiligen Stabhalterrings (14), gewählt wird.

11. Verfahren nach zumindest einem der vorstehenden Ansprüche, wobei der radiale Pressweg, dem ein jeweiliger Stabhalterring (14) ausgesetzt wird, zumindest im Wesentlichen durch die folgende Beziehung bestimmt wird:

$$P = ((Z \times Pi) + (N \times L \times F) / Pi) - Z,$$

wobei

P = radialer Pressweg;
Z = Ziel-Innendurchmesser, d.h. vorgebbarer endgültiger Innendurchmesser eines jeweiligen Stabhalterrings (14);
Pi = Kreiszahl;
N = Anzahl der in den Stabhalterringen (14) insgesamt vorgesehenen Aussparungen (16);
L = Luftspalt zwischen einem jeweiligen in eine Aussparung (16) eines Stabhalterrings (14) eingesetzten Profilstabs (12) und der Wand der Aussparung (16) in Umfangsrichtung der zylindrischen Siebvorrichtung (10);
F = Zuschlagsfaktor.

12. Verfahren nach zumindest einem der vorstehenden Ansprüche, wobei der vor der radialen Pressung der Stabhalterringe (14) in Umfangsrichtung der zylindrischen Siebvorrichtung (10) vorgesehene durchschnittliche Luftspalt zwischen den Profilstäben (12) und den Wänden der Aussparungen (16) der Stabhalterringe (14) zwischen etwa 0,02 mm und etwa 0,06 mm und vorzugsweise im Bereich von 0,02 mm, im Bereich von 0,04 mm oder im Bereich von 0,06 mm liegt.

**13.** Verfahren nach zumindest einem der vorstehenden Ansprüche, wobei die axiale Dicke eines jeweiligen Stabhalterrings (14) unabhängig vom endgültigen Außendurchmesser der zylindrischen Siebvorrichtung (10) zwischen 2 mm und 8 mm und vorzugsweise zwischen 2, 5 mm und 4 mm liegt.

**14.** Verfahren nach zumindest einem der vorstehenden Ansprüche, wobei bei einer Verwendung mit einer wellenartigen Außenkontur (28) vorgefertigter Stabhalterringe (14) die Wellung der Außenkontur (28) der Stabhalterringe (14) so vorgesehen wird, dass die Stabhalterringe (14) bei einer radialen Pressung über deren wellenartige Außenkontur (28) jeweils eine Makro- und/oder Mikrowellung in axialer und radialer Richtung sowie eine Mischung zwischen einer direkt wirkenden radialen Presskraft im Bereich eines jeweiligen Wellenbergs und radial und schräg zur direkt wirkenden Radialkraft auftretenden Schleppkräften im Bereich eines jeweiligen Wellentales erfahren.

**15.** Verfahren nach zumindest einem der vorstehenden Ansprüche, wobei bei einer Verwendung mit einer wellenartigen Außenkontur vorgefertigter Stabhalterringe (14) die Wellung der Außenkontur (28) der Stabhalterringe (14) zumindest im Wesentlichen sinusförmig vorgesehen wird.

**Claims**

**1.** Method for producing a cylindrical screen device (10) having a large number of profiled bars (12), wherein the profiled bars (12) are inserted parallel with each other and parallel with the cylinder axis in recesses (16) which are open at the edge and which are provided on the inner side of a large number of bar retention rings (14) which each extend about the cylinder axis in a plane perpendicular to the cylinder axis and which are spaced apart from each other in an axial direction, which recesses in terms of their shape at least substantially complement the shape of bar bases (18) of the profiled bars (12) but are initially still slightly larger than them, and the inner and outer diameters of the bar retention rings (14) are permanently reduced via forces acting radially from the outer side until a positive-locking connection is formed between the profiled bars (12) and the recesses (16) of the bar retention rings (14), wherein the forces acting radially from the outer side are applied by means of pressing jaws (20) which are distributed over the periphery of the bar retention rings (14), **characterized in that** the pressing jaws (20) which are each provided with a plurality of grooves (22) which extend in a peripheral and radial direction for receiving a respective bar retention ring (14), of which during a respective pressing operation only some act as a pressing groove for direct radial pressing of the respective bar retention ring (14) and the other grooves (22) act only as guiding grooves, by means of which the respective bar retention rings (14) are prevented from axial deflection, and/or bar retention rings (14) which are prefabricated with an undulating outer contour (28) in each case and which via their undulating outer contour (28) are radially pressed by means of forces acting radially from the outer side are used.

**2.** Method according to Claim 1, wherein various bar retention rings (14) are successively subjected in each case to a direct radial pressing action via the pressing groove (22') of a respective pressing jaw (20) .

**3.** Method according to Claim 2, wherein, for the successive direct radial pressing of the various bar retention rings (14) by the pressing groove (22') of a respective pressing jaw (20), the bar retention rings (14) which are provided with the profiled bars (12) and the pressing jaw (20) are axially displaced relative to each other.

**4.** Method according to at least one of the preceding claims, wherein pressing jaws (20) having in each case from two to nine grooves (22) which extend in a peripheral and radial direction are used to receive a respective bar retention ring (14).

**5.** Method according to at least one of the preceding claims, wherein pressing jaws (20) having in each case an uneven number of grooves (22) which extend in a peripheral and radial direction are used to receive a respective bar retention ring (14), of which only the central groove is provided as a pressing groove (20').

**6.** Method according to Claim 5, wherein, when bar retention rings (14) with a respective initial outer diameter in the region of 1200 mm are used, pressing jaws (20) having in each case five, seven or nine grooves (22) which extend in a peripheral and radial direction are used and, when bar retention rings (14) with a respective initial outer diameter of less than approximately 600 mm are used, pressing jaws (20) having in each case three grooves (22) which extend in a peripheral and radial direction are used to receive a respective bar retention ring (14) .

7. Method according to at least one of the preceding claims, wherein the radial pressing of the bar retention rings (14) is carried out by means of a plurality of pressing jaws (20) which are distributed in a uniform manner over the periphery thereof.

8. Method according to Claim 7, wherein intermediate jaws (26) are inserted into the respective gaps (24) in order to bridge spacings which are provided from the beginning of a respective pressing operation between the pressing jaws (20) which extend in a uniform manner over the periphery and which become smaller with increasing radial pressing of the bar retention rings (14).

9. Method according to at least one of the preceding claims, wherein, prior to the radial pressing of the bar retention rings (14), there is an air gap between a respective profiled bar (12) which is inserted into a recess (16) of a bar retention ring (14) and the wall of the recess (16) in a peripheral direction of the cylindrical screen device.

10. Method according to at least one of the preceding claims, wherein the radial pressing path, to which a respective bar retention ring (14) is subjected, is selected in accordance with the target inner diameter, that is to say, the predeterminable definitive inner diameter of a respective bar retention ring (14).

11. Method according to at least one of the preceding claims, wherein the radial pressing path, to which a respective bar retention ring (14) is subjected, is determined at least substantially by the following relationship:

$$P = ((Z \times Pi) + (N \times L \times F) / Pi) - Z,$$

where

P = radial pressing path;
Z = target inner diameter, that is to say, predeterminable definitive inner diameter of a respective bar retention ring (14);
Pi = Pi (constant);
N = total number of recesses (16) provided in the bar retention rings (14);
L = air gap between a respective profiled bar (12) inserted in a recess (16) of a bar retention ring (14) and the wall of the recess (16) in the peripheral direction of the cylindrical screen device (10) ;
F = supplement factor.

12. Method according to at least one of the preceding claims, wherein the mean air gap provided prior to the radial pressing of the bar retention rings (14) in a peripheral direction of the cylindrical screen device (10) between the profiled bars (12) and the walls of the recesses (16) of the bar retention rings (14) is between approximately 0.02 mm and approximately 0.06 mm and preferably in the region of 0.02 mm, in the region of 0.04 mm or in the region of 0.06 mm.

13. Method according to at least one of the preceding claims, wherein the axial thickness of a respective bar retention ring (14) regardless of the definitive outer diameter of the cylindrical screen device (10) is between 2 mm and 8 mm and preferably between 2.5 mm and 4 mm.

14. Method according to at least one of the preceding claims, wherein, when bar retention rings (14) which are prefabricated with an undulating outer contour (28) are used, the undulation of the outer contour (28) of the bar retention rings (14) is provided in such a manner that the bar retention rings (14) in the event of a radial pressing via the undulating outer contour (28) thereof are subjected in each case to a macro undulation and/or micro undulation in an axial and radial direction and a mixture between a directly acting radial pressing force in the region of a respective wave crest and drag forces which occur in a radial and oblique manner with respect to the directly acting radial force in the region of a respective wave trough.

15. Method according to at least one of the preceding claims, wherein, when bar retention rings (14) which are prefabricated with an undulating outer contour are used, the undulation of the outer contour (28) of the bar retention rings (14) is provided in an at least substantially sinusoidal manner.

**Revendications**

1. Procédé de fabrication d'un dispositif de tamisage cylindrique (10) comportant une pluralité de barres profilées (12), dans lequel les barres profilées (12) sont insérées parallèlement les unes aux autres et parallèlement à l'axe du cylindre dans des évidements (16) à bord ouvert prévus sur le côté intérieur d'une pluralité d'anneaux de support de barre (14) espacés les uns des autres dans la direction axiale, s'étendant chacun dans un plan perpendiculaire à l'axe du cylindre autour de l'axe du cylindre, qui, en ce qui concerne leur forme, sont au moins essentiellement complémentaires de la forme des pieds de barre (18) des barres profilées (12), mais d'abord encore légèrement plus grands que ceux-ci, et le diamètre intérieur et extérieur des anneaux de support de barre (14) est réduit de manière permanente par des forces agissant radialement depuis l'extérieur jusqu'à la complémentarité de forme entre les barres profilées (12) et les évidements (16) des anneaux de support de barre (14), les forces agissant radialement depuis l'extérieur étant appliquées par des mâchoires de compression (20) réparties sur la périphérie des anneaux de support de barre (14), **caractérisé en ce que** les mâchoires de compression (20) sont pourvues chacune de plusieurs rainures (22) s'étendant dans la direction périphérique et radiale pour recevoir un anneau de support de barre (14) respectif, dont une partie seulement sert de rainure de compression pour la compression radiale directe de l'anneau de support de barre (14) concerné pendant une opération de compression respective et dont les autres rainures (22) servent uniquement de rainures de guidage, par lesquelles les anneaux de support de barre (14) concernés sont empêchés de dévier axialement, et/ou des anneaux de support de barre (14) préfabriqués avec un contour extérieur (28) de type ondulé sont utilisés, qui sont pressés radialement par l'intermédiaire de leur contour extérieur (28) de type ondulé par des forces agissant radialement depuis l'extérieur.

2. Procédé selon la revendication 1, dans lequel différents anneaux de support de barre (14) sont soumis successivement à une compression radiale directe par l'intermédiaire de la rainure de compression (22') d'une mâchoire de compression respective (20).

3. Procédé selon la revendication 2, dans lequel, pour la compression radiale directe successive des différents anneaux de support de barre (14) par la rainure de compression (22') d'une mâchoire de compression respective (20), les anneaux de support de barre (14) garnis des barres profilées (12) et la mâchoire de compression (20) sont déplacés axialement les uns par rapport aux autres.

4. Procédé selon au moins l'une quelconque des revendications précédentes, dans lequel des mâchoires de compression (20) comportant chacune deux à neuf rainures (22) s'étendant dans la direction périphérique et radiale sont utilisées pour recevoir un anneau de support de barre (14) respectif.

5. Procédé selon au moins l'une quelconque des revendications précédentes, dans lequel des mâchoires de compression (20) comportant chacune un nombre impair de rainures (22) s'étendant dans la direction périphérique et radiale sont utilisées pour recevoir un anneau de support de barre (14) respectif, dont seule la rainure centrale est prévue comme rainure de compression (20').

6. Procédé selon la revendication 5, dans lequel, lors d'une utilisation d'anneaux de support de barre (14) ayant un diamètre extérieur initial respectif dans la plage de 1 200 mm, des mâchoires de compression (20) comportant respectivement cinq, sept ou neuf rainures (22) s'étendant dans la direction périphérique et radiale et, lors d'une utilisation d'anneaux de support de barre (14) ayant un diamètre extérieur initial respectif inférieur à environ 600 mm, des mâchoires de compression (20) comportant chacune trois rainures (22) s'étendant dans la direction périphérique et radiale sont utilisées pour recevoir un anneau de support de barre (14) respectif.

7. Procédé selon au moins l'une quelconque des revendications précédentes, dans lequel la compression radiale des anneaux de support de barre (14) est effectuée par plusieurs mâchoires de compression (20) réparties uniformément sur leur périphérie.

8. Procédé selon la revendication 7, dans lequel des mâchoires intermédiaires (26) sont insérées dans les trous (24) concernés pour couvrir les distances prévues au début d'une opération de compression respective entre les mâchoires de compression (20) réparties uniformément sur la périphérie, distances qui diminuent au fur et à mesure de l'augmentation de la compression radiale des anneaux de support de barre (14).

9. Procédé selon au moins l'une quelconque des revendications précédentes, dans lequel, avant la compression radiale des anneaux de support de barre (14), il existe un intervalle entre une barre profilée (12) respective insérée dans un évidement (16) d'un anneau de support de barre (14) et la paroi de l'évidement (16) dans la direction périphérique du dispositif de tamisage cylindrique.

10. Procédé selon au moins l'une quelconque des revendications précédentes, dans lequel la course de compression radiale à laquelle est soumis un anneau de support de barre (14) respectif est choisie en fonction du diamètre intérieur cible, c'est-à-dire du diamètre intérieur final prédéfinissable d'un anneau de support de barre (14) respectif.

11. Procédé selon au moins l'une quelconque des revendications précédentes, dans lequel la course de compression radiale à laquelle est soumis un anneau de support de barre (14) respectif est déterminée au moins essentiellement par la relation suivante :

$$P = ((Z \times Pi) + (N \times L \times F) / Pi) - Z,$$

où

P = course de compression radiale ;
Z = diamètre intérieur cible, c'est-à-dire diamètre intérieur final prédéfinissable d'un anneau de support de barre (14) respectif ;
Pi = nombre de cercles ;
N = nombre total d'évidements (16) prévus dans les anneaux de support de barre (14) ;
L = intervalle entre une barre profilée (12) respective insérée dans un évidement (16) d'un anneau de support de barre (14) et la paroi de l'évidement (16) dans la direction périphérique du dispositif de tamisage cylindrique (10) ;
F = facteur de majoration.

12. Procédé selon au moins l'une quelconque des revendications précédentes, dans lequel l'intervalle moyen entre les barres profilées (12) et les parois des évidements (16) des anneaux de support de barre (14), prévu avant la compression radiale des anneaux de support de barre (14) dans la direction périphérique du dispositif de tamisage cylindrique (10), est compris entre environ 0,02 mm et environ 0,06 mm et de préférence dans la plage de 0,02 mm, dans la plage de 0,04 mm ou dans la plage de 0,06 mm.

13. Procédé selon au moins l'une quelconque des revendications précédentes, dans lequel l'épaisseur axiale d'une bague de support de barre (14) respective est comprise entre 2 mm et 8 mm, et de préférence entre 2,5 mm et 4 mm, indépendamment du diamètre extérieur final du dispositif de tamisage cylindrique (10).

14. Procédé selon au moins l'une quelconque des revendications précédentes, dans lequel, lors d'une utilisation d'anneaux de support de barre (14) préfabriqués avec un contour extérieur (28) de type ondulé, l'ondulation du contour extérieur (28) des anneaux de support de barre (14) est prévue de telle sorte que les anneaux de support de barre (14), lors d'une compression radiale, subissent chacun, par l'intermédiaire de leur contour extérieur (28) de type ondulé, une macro- et/ou micro-ondulation dans la direction axiale et radiale, ainsi qu'un mélange entre une force de compression radiale agissant directement dans la zone d'une crête d'ondulation respective et des forces de traction apparaissant radialement et en oblique par rapport à la force radiale agissant directement dans la zone d'un creux d'ondulation respectif.

15. Procédé selon au moins l'une quelconque des revendications précédentes, dans lequel, lors d'une utilisation d'anneaux de support de barre (14) préfabriqués avec un contour extérieur de type ondulé, l'ondulation du contour extérieur (28) des anneaux de support de barre (14) est prévue au moins essentiellement sous forme sinusoïdale.

## Fig.1

## Fig.2

## Fig.3

EP 3 941 648 B1

Fig.4

14

20    20    20    20

## Fig.5

20

22
22
22'
22
22

## Fig.6

20

20

26    24

Fig.7

## Fig.8

## Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013224528 B3
- DE 102018101666 B3
- DE 102017129765B3